# DEMANDE DE BREVET EUROPEEN

(11) **EP 4 819 040 A1**
(43) Date de publication de la demande: **07.10.2026**
(21) Numéro de dépôt: 25305473.8
(22) Date de dépôt: 31.03.2025
(51) Int. Cl.: G06T 7/20

(54) **PROCÉDÉ, PROGRAMME D'ORDINATEUR ET DISPOSITIF DE SUIVI D'UN OBJET CIBLE DANS UN FLUX D'IMAGES**

(71) Demandeur: BULL SAS, 78340 Les Clayes-Sous-Bois (FR)
(72) Inventeur: METGE, Baptiste, 38000 Grenoble (FR); BLANC, Philippe, 35160 Talensac (FR); MENU-CERRI, Valentin, 38000 Grenoble (FR)
(74) Mandataire: IPAZ

(57) **Abrégé**

L'invention concerne un procédé (100) de suivi d'un objet cible dans un flux d'images (F), comprenant les étapes suivantes :
- réalisation d'une pluralité de suivis dudit objet cible dans ledit flux d'images (F), ladite pluralité de suivis comprenant :
▪ un suivi (110) dudit objet cible, dit suivi avant, réalisé à partir d'une image de début dudit flux d'images (F), dans l'ordre chronologique dans ledit flux d'images (F), et fournissant une tracklet, dite tracklet avant, pour ledit objet cible, et
▪ un suivi (120) dudit objet cible, dit suivi arrière, réalisé à partir d'une image de fin dudit flux d'images (F), dans l'ordre antéchronologique dans ledit flux d'images (F), et fournissant une tracklet, dite tracklet arrière, pour ledit objet cible ; et

- vérification (130) d'une concordance entre lesdites tracklets obtenues.

Elle concerne également un programme d'ordinateur et un dispositif mettant en œuvre un tel procédé.

## Description

La présente invention concerne un procédé de suivi d'un objet cible dans un flux d'images. Elle concerne également un programme d'ordinateur et un dispositif mettant en œuvre un tel procédé.

Le domaine de l'invention est de manière générale le domaine du suivi d'objets dans un flux d'images, tel qu'un flux d'images capté par une ou plusieurs caméras, également appelé tracking en anglais.

### État de la technique

Les solutions de suivi (« tracking » en anglais) d'un objet cible dans un flux d'images, ou une vidéo, sont largement connues et utilisées. Ces solutions permettent de déterminer, en temps réel ou a posteriori, la trajectoire d'un objet cible dans une scène, à partir d'images captées par une ou plusieurs caméras filmant ladite scène.

Concrètement, un tracking d'un objet cible est réalisé de la manière suivante. L'objet cible est indiqué/sélectionné dans une image de départ. Puis, ledit objet cible est identifié dans les autres images du flux d'images, de manière automatisée, par un modèle préalablement entrainé pour la détection d'objets, tel que par exemple un réseau de neurones à apprentissage profond. Pour chaque image traitée, la zone d'image correspondant à l'objet cible est copiée. Les zones d'images ainsi obtenues forment une tracklet pour ledit objet cible.

Actuellement, le tracking d'un objet cible nécessite une vérification de la part d'un opérateur pour s'assurer que le tracking a été réalisé de manière correcte. Concrètement, l'opérateur visionne la tracklet obtenue pour s'assurer que le tracking n'a pas perdu l'objet cible, ou qu'il n'y a pas eu de confusion entre l'objet cible et un autre objet, ou encore que la tracklet ne comprend pas d'autres objets que l'objet cible, etc. Or, une telle vérification est chronophage, fastidieuse, peut devenir impossible à réaliser lorsque le nombre d'objets cibles à suivre est important. De plus, elle reste sujette à des erreurs humaines.

### Exposé de l'invention

Un but de la présente invention est de remédier à au moins un des inconvénients de l'état de la technique.

Un autre but de l'invention est de proposer une solution de suivi d'objet dans un flux d'images plus efficace tout en étant moins fastidieuse et moins chronophage.

L'invention propose d'atteindre au moins l'un des buts précités par un procédé de suivi d'un objet cible dans un flux d'images, ledit procédé comprenant les étapes suivantes :
- réalisation d'une pluralité de suivis dudit objet cible dans ledit flux d'images, ladite pluralité de suivis comprenant :
   ▪ un suivi dudit objet cible, dit suivi avant, réalisé à partir d'une image de début dudit flux d'images, dans l'ordre chronologique dans ledit flux d'images, et fournissant une tracklet, dite tracklet avant, pour ledit objet cible, et
   ▪ un suivi dudit objet cible, dit suivi arrière, réalisé à partir d'une image de fin dudit flux d'images, dans l'ordre antéchronologique dans ledit flux d'images, et fournissant une tracklet, dite tracklet arrière, pour ledit objet cible ; et
- vérification d'une concordance entre lesdites tracklets obtenues.

Ainsi, pour le suivi d'un objet cible dans un flux d'images, l'invention propose de réaliser, non pas un, mais au moins deux suivis dudit objet cible dans ledit flux d'images : un suivi dans l'ordre chronologique à partir d'une image sélectionnée au début dudit flux d'images, et un suivi dans l'ordre antéchronologique à partir d'une image sélectionnée à la fin dudit flux d'images. Chaque suivi permet de fournir, pour un même objet cible, une tracklet. L'invention propose de vérifier l'efficacité dudit suivi à partir d'une concordance entre les tracklets avant et arrière obtenues par lesdits au moins deux suivis.

Ainsi, l'invention permet de réaliser un suivi d'un objet cible dans un flux d'images avec une vérification automatisée permettant de déterminer si ledit suivi a été réalisée correctement ou non. En effet, si les deux tracklets obtenues concordent entre elles, cela veut dire que lesdits suivis ont été réalisés correctement. Dans le cas contraire, cela indique qu'au moins un des suivis a rencontré une erreur, tel qu'une perte de l'objet cible, une confusion de l'objet cible avec un autre objet, etc. Ainsi, la solution de suivi d'objet proposée par la présente invention est plus efficace.

De plus, la vérification de la concordance entre les tracklets peut être réalisée de manière automatisée et ne nécessite pas une intervention humaine. Par exemple, cette concordance peut être réalisée par comparaison des positions détectées par chacun des suivis pour l'objet cible, sur telle ou telle image du flux d'images. Ainsi, la solution de suivi proposée par la présente invention est moins fastidieuse et moins chronophage.

Dans la présente demande par « objet » ou « objet cible » on entend tout type d'objet, tel qu'un humain, un animal, une voiture, etc.

Dans la présente demande par « tracklet », on entend l'ensemble de zones d'image représentant l'objet cible, dans le flux d'images.

Par « caméra », on entend tout type d'appareil d'acquisition d'une image, telle que tout type de caméra de type RGB, LIDAR, thermique, 3D, etc.

Par suivi chronologique, on entend un suivi traitant des images du flux d'images dans l'ordre chronologique de leur captation.

Par suivi antéchronologique, on entend un suivi traitant des images du flux d'images dans l'ordre antéchronologique de leur captation.

Selon l'invention, l'étape de vérification de la concordance entre deux tracklets peut être réalisée pour tout instant de captation d'une image dans le flux d'images.

Par exemple, l'étape de vérification de la concordance entre deux tracklets peut être réalisée pour un unique instant de captation d'une image dans le flux d'images.

Par exemple, l'étape de vérification de la concordance entre deux tracklets peut être réalisée pour plusieurs instants de captation d'images dans le flux d'images.

Suivant des modes de réalisation, l'étape de vérification peut comprendre une vérification d'une correspondance des tracklets obtenues, à au moins un, et en particulier chaque, instant intermédiaire se trouvant entre les instants de captation respectifs des images de début et de fin.

Par exemple, un instant de captation d'une image intermédiaire, c'est-à-dire d'une image captée entre l'image de début et l'image de fin, peut être choisi. Les tracklets obtenues peuvent être comparées pour vérifier leur concordance audit instant intermédiaire. En d'autres termes, les résultats des tracklets obtenues audit instant intermédiaire peuvent être comparés pour vérifier la concordance desdites tracklets.

L'instant intermédiaire peut être tout instant se trouvant entre l'instant de captation de l'image de début et l'instant de captation de l'image de fin.

Suivant des modes de réalisation, l'étape de vérification peut comprendre une vérification d'une correspondance des tracklets obtenues, à mi-chemin entre les instants de captation respectifs des images de début et de fin.

En d'autres termes, l'instant intermédiaire auquel la vérification de concordance est réalisée pour les tracklets obtenues correspond à michemin entre l'instant de captation de l'image de départ et l'instant de captation de l'image de fin.

Selon l'invention, l'étape de vérification de la concordance entre deux tracklets peut être réalisée de toutes les manières connues et adéquates.

Suivant des modes de réalisation, l'étape de vérification peut comprendre une vérification d'une correspondance des positions de l'objet cible, ou d'une boite englobant ledit objet cible, dans les tracklets obtenues, à un même instant.

Dans ce cas, pour un instant donné, la position de l'objet cible telle que détectée dans la tracklet avant est lue dans ladite tracklet avant et la position de l'objet cible telle que détectée dans la tracklet arrière est lue dans ladite tracklet arrière. Les positions ainsi lues sont comparées entre elles. Si les positions correspondent, alors cela indique que le suivi a été réalisée de manière efficace et sans erreur pour ledit instant. Dans le cas contraire, cela indique qu'au moins une des deux tracklets est erronée.

Pour au moins une tracklet, la position lue peut être le centre de la boîte englobant l'objet cible dans ladite tracklet audit instant. Pour au moins une tracklet, la position lue peut être un coin, par exemple le coin supérieur droit, de la boîte englobant l'objet cible dans ladite tracklet. Tout autre position peut être utilisée et l'invention n'est pas limitée à une position particulière.

Suivant des modes de réalisation, l'étape de vérification peut comprendre une vérification d'une correspondance de zones d'image dans les tracklets obtenues à un même instant.

Dans ce cas, pour un instant donné, la zone d'image comprenant l'objet cible telle que détectée dans chaque tracklet est lue dans ladite tracklet. Les zones d'images ainsi lues sont comparées entre elles. Si les zones d'image correspondent, alors cela indique que le suivi a été réalisé de manière efficace et sans erreur pour ledit instant. Dans le cas contraire, cela indique qu'au moins une des deux tracklets est erronée.

La comparaison de deux zones d'images peut être réalisée de toute les manières connues, par exemple en calculant un score de ressemblance, un score de différence, un score de corrélation, etc.

La comparaison de deux zones d'images peut être réalisée en utilisant tout type d'outil, tel que par exemple une relation mathématique, un modèle d'intelligence artificielle préalablement entrainé, etc.

Suivant des modes de réalisation, au moins un, et en particulier chaque, suivi peut être réalisé jusqu'à la fin du flux d'images dans le sens dudit suivi.

En particulier, le suivi avant peut être réalisée à partir de l'image de début jusqu'à la dernière image se trouvant dans le flux d'images dans l'ordre chronologique. Ainsi, le suivi chronologique concerne toutes les images du flux d'images captées après l'image de début.

Alternativement, ou en plus, le suivi arrière peut être réalisé à partir de l'image de fin jusqu'à la première image se trouvant dans le flux d'images dans l'ordre chronologique. Ainsi, le suivi arrière concerne toutes les images du flux d'images captées avant l'image de fin.

Suivant des modes de réalisation, au moins un, et en particulier chaque, suivi peut être réalisé jusqu'à un instant se trouvant entre l'instant de début et l'instant de fin.

Suivant des modes de réalisation, au moins un, et en particulier chaque, suivi peut être réalisé jusqu'à un instant correspondant à mi-chemin entre l'instant de début et l'instant de fin.

En particulier, le suivi avant peut être réalisé à partir de l'image de début jusqu'à l'instant mi-chemin entre l'instant de captation de l'image de début et l'instant de captation de l'image de fin. En d'autres termes, l'image de début a été captée à l'instant IND et l'image de fin a été captée à l'instant INF, alors le suivi avant peut être réalisé jusqu'à l'image captée à l'instant de mi-chemin, INM défini tel que INM= IND + (INF-IND)/2. Dans ce cas, toutes les images captées entre l'instant IND et l'instant INM sont traitées dans le suivi avant.

Alternativement, ou en plus, le suivi arrière peut être réalisée à partir de l'image de fin jusqu'à l'instant mi-chemin entre l'instant de captation de l'image de début et l'instant de captation de l'image de fin. En d'autres termes, l'image de début a été captée à l'instant IND et l'image de fin a été captée à l'instant INF, alors le suivi arrière peut être réalisé depuis l'image de fin jusqu'à l'image captée à l'instant de mi-chemin INM défini tel que INM= INF - (INF-IND)/2. Dans ce cas, toutes les images captées entre l'instant INF et l'instant INM sont traitées dans le suivi arrière.

Dans le cas où :
- le suivi avant est réalisé depuis l'image de début jusqu'à l'instant de mi-chemin, et
- le suivi arrière est réalisé depuis l'image de fin jusqu'à l'instant de mi-chemin ;
les deux suivis ont pour seul instant commun ledit instant de mi-chemin, et pour seule image commune l'image captée audit instant mi-chemin. Ce dernier peut alors être utilisé pour vérifier la concordance des suivis réalisés. Si les suivis avant et arrière se correspondent à l'instant de mi-chemin, c'est-à-dire qu'ils convergent à la même zone d'image dans l'image captée audit instant de mi-chemin, alors cela veut dire que lesdits suivis ont été réalisés correctement. Dans le cas contraire, cela indique qu'au moins un desdits suivis est erroné.

Suivant des modes de réalisation, le procédé selon l'invention peut comprendre une étape de fourniture d'une tracklet, dite finale, pour l'objet cible, lorsque l'étape de vérification confirme la correspondance entre les tracklets obtenues.

Dans ce cas, les suivis ont été correctement réalisés et une tracklet finale peut être fournie pour l'objet cible.

La tracklet finale peut être l'une des tracklets avant ou arrière.

En particulier, lorsque le suivi chronologique est réalisé à partir de la première image du flux d'image, c'est à dire la plus ancienne image du flux d'images, et pour toutes les images suivantes, alors la tracklet finale peut être la tracklet avant fournie par le suivi chronologique.

Alternativement, ou en plus, lorsque le suivi arrière est réalisé à partir de la dernière image du flux d'image, c'est à dire la plus récente image du flux d'images, et pour toutes les images précédentes, alors la tracklet finale peut être la tracklet arrière fournie par le suivi arrière.

Suivant des modes de réalisation, la tracklet finale peut être construite à partir des tracklets avant et arrière obtenues lors de suivis.

En particulier, lorsqu'aucun des suivis réalisés ne couvre l'ensemble du flux d'images, alors la tracklet finale peut être construite à partir des tracklets avant et arrière obtenues lors desdits suivis.

Dans ce cas, le procédé selon l'invention peut comprendre une étape de construction de la tracklet finale à partir des tracklets avant et arrière.

Une telle construction peut être réalisée selon toute technique connue.

En particulier, une telle construction peut être réalisée par concaténation desdites tracklets avant et arrière, en veillant à éliminer les doublons pour les images traitées par lesdits suivis.

Suivant un exemple de réalisation, le procédé selon l'invention peut comprendre une étape de signalisation d'un résultat de l'étape de vérification.

Cette étape de signalisation peut être réalisée quel que soit le résultat de l'étape de vérification. Dans ce cas, l'opérateur est informé du résultat de la vérification, qu'elle soit positive ou négative.

Alternativement, l'étape de signalisation peut être réalisée uniquement lorsque le résultat de l'étape de vérification de correspondance est positif, c'est-à-dire lorsque les tracklets se correspondent. Dans ce cas, l'opérateur est informé de la réalisation sans erreur du suivi de l'objet cible.

Alternativement, l'étape de signalisation peut être réalisée lorsque le résultat de l'étape de vérification de correspondance est négatif, c'est-à-dire lorsque les tracklets ne se correspondent pas. Dans ce cas, l'opérateur est informé que le suivi comporte une erreur. Il peut ainsi réaliser une vérification manuelle dudit suivi et éventuellement corriger l'erreur.

La signalisation peut réaliser une signalisation visuelle.

Alternativement, ou en plus, la signalisation peut réaliser une signalisation sonore.

Suivant des modes de réalisation, l'image de début, à partir de laquelle est réalisé le suivi avant, peut correspondre à l'image la plus ancienne dans le flux d'images. Dans ce cas, le suivi avant peut concerner l'ensemble des images du flux d'images.

Alternativement, l'image de début, utilisée pour réaliser le suivi avant, peut ne pas correspondre à l'image la plus ancienne dans le flux d'image. Elle peut être choisie parmi les images les plus anciennes du flux d'images, par exemple parmi les 50%, ou 25%, ou encore 10%, ou encore 5% des images les plus anciennes dans le flux d'images.

Suivant des modes de réalisation, l'image de fin, à partir de laquelle est réalisé le suivi arrière, peut correspondre à l'image la plus récente dans le flux d'images. Dans ce cas, le suivi arrière peut concerner l'ensemble des images du flux d'images, dans l'ordre antéchronologique.

Alternativement, l'image de fin peut ne pas correspondre à l'image la plus récente dans le flux d'images. Elle peut être choisie parmi les images les plus récentes du flux d'images, par exemple parmi les 50%, ou 25%, ou 10%, ou encore 5% des images les plus récentes dans le flux d'images.

Pour au moins un des suivis, la réalisation dudit suivi peut comprendre une identification dudit objet cible, dans l'image par laquelle commence ledit suivi, par sélection d'une boite, dite bounding box, comprenant ledit objet cible.

Cette sélection peut être réalisée de manière manuelle.

Alternativement, cette sélection peut être réalisée de manière automatisée, par exemple par un outil de détection d'objet dans une image, par exemple un modèle d'intelligence artificielle.

Selon un autre aspect de l'invention, il est proposé un programme d'ordinateur comprenant des instructions exécutables qui, lorsqu'elles sont exécutées par un appareil informatique, mettent en œuvre toutes les étapes du procédé, selon l'invention, de suivi d'un objet cible.

Le programme d'ordinateur peut être en tout langage informatique, tel que par exemple en langage machine, en C, C++, JAVA, Python, etc.

Le programme d'ordinateur peut être un seul programme ou un ensemble de plusieurs programmes.

Selon un autre aspect de l'invention, il est proposé un dispositif de suivi d'un objet cible comprenant des moyens configurés pour mettre en œuvre toutes les étapes du procédé, selon l'invention, de suivi d'un objet cible.

Le dispositif selon l'invention peut être tout type d'appareil tel qu'un serveur, un ordinateur, une tablette, un calculateur, un processeur, une puce informatique, programmé pour mettre en œuvre le procédé selon l'invention, par exemple par le programme d'ordinateur selon l'invention.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple de réalisation non limitatif d'un procédé selon l'invention de suivi d'un objet cible ;
- les FIGURES 2a et 2b sont des représentations schématiques d'exemples de réalisation non limitatifs de suivi d'objet selon l'invention ; et
- la FIGURE 3 est une représentation schématique d'un exemple de réalisation non limitatif d'un dispositif selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

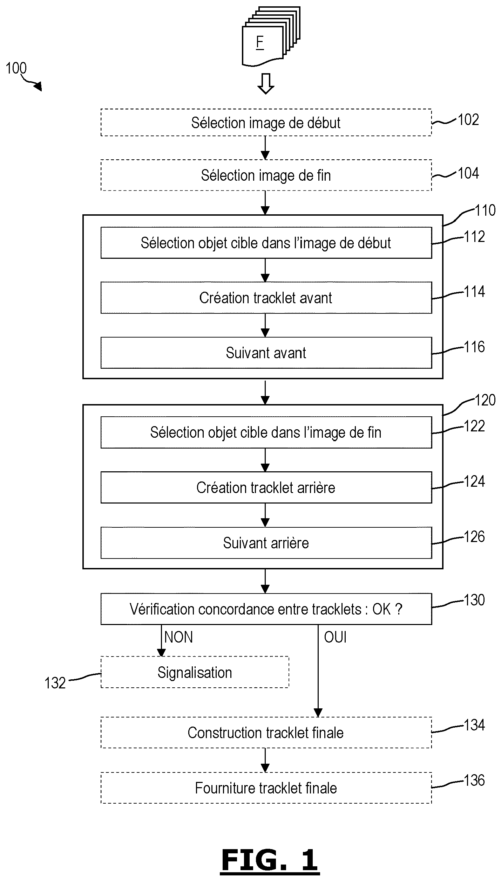

La FIGURE 1 est une représentation schématique d'un exemple de réalisation non limitatif d'un procédé selon l'invention de suivi d'objet.

Le procédé 100 de la FIGURE 1 peut être utilisé pour le suivi en temps réel de tout type d'objets cibles tels que des humains, des animaux, des voitures, etc. à partir d'un flux d'images, noté F.

Sans perte de généralité, le flux d'images F peut être obtenue par une ou plusieurs caméras. Dans la suite, et sans perte de généralité, on estime que le procédé est utilisé pour le suivi d'une personne cible.

Le procédé 100 comprend une étape 102, optionnelle, de sélection d'une image, dite image de début, pour réaliser un suivi de l'objet cible, dit suivi avant, dans le flux d'images, dans l'ordre chronologique de captation des images.

L'image de début peut être la première image du flux d'images F, c'est-à-dire l'image la plus ancienne dans le flux d'images F. L'image de début peut ne pas être la première image du flux d'images F mais choisie parmi les plus anciennes images du flux d'images, par exemple parmi les X% d'images les plus anciennes du flux d'images, c'est-à-dire les X% des images se trouvant au début du flux d'images dans l'ordre chronologique. A titre d'exemples non limitatif, X=25, ou X=10 ou encore X=5.

Cette étape 102 est optionnelle car l'image de début peut être par défaut la première image du flux d'images F, c'est-à-dire l'image la plus ancienne dans le flux d'image.

Suivant une notation non limitative, on note IND l'instant de captation de l'image de début. Suivant une notation non limitative, on note IMD l'image de début.

Le procédé 100 comprend une étape 104, optionnelle, de sélection d'une image, dite image de fin, pour réaliser un suivi de l'objet cible, dit suivi arrière, dans le flux d'images F, dans l'ordre antéchronologique de captation des images.

L'image de fin peut être la dernière image du flux d'images F, c'est-à-dire l'image la plus récente dans le flux d'images F. L'image de fin peut ne pas être la dernière image du flux d'images mais choisie parmi les plus récentes images du flux d'images, par exemple parmi les X% d'images les plus récentes du flux d'images F, c'est-à-dire les X% des images se trouvant à la fin du flux d'images F dans l'ordre chronologique. A titre d'exemples non limitatif, X=25, ou X=10 ou encore X=5.

Cette étape 104 est optionnelle car l'image de fin peut être par défaut la dernière image du flux d'images F, c'est-à-dire l'image la plus récente dans le flux d'images F. Suivant une définition générale, on note INF l'instant de captation de l'image de fin.

Dans la suite, on considère que l'image de début est la première image du flux d'images F, c'est-à-dire l'image la plus ancienne dans le flux d'images.

Suivant une notation non limitative, on note INF l'instant de captation de l'image de fin. Suivant une notation non limitative, on note IMF l'image de fin.

Le procédé 100 comprend une phase 110 réalisant, dans le flux d'images F, le suivi avant de l'objet cible, à partir de l'image de début IMD.

Pour rappel, la phase de suivi avant 110 réalise un suivi de l'objet cible dans l'ordre chronologique dans le flux d'images F, c'est-à-dire en traitant les images dans l'ordre chronologique de captation, à partir de l'image de début IMD.

Lors d'une étape 112, l'objet cible est identifié dans l'image de début IMD. Cette identification peut être réalisée manuellement. Alternativement, cette identification peut être réalisée de manière automatisée, par exemple avec un outil d'intelligence artificielle d'analyse d'images, tel que par exemple YOLOV5 à partir d'un visuel de l'objet cible. Lors de cette étape 112, par exemple, une boite englobante est positionnée sur l'objet cible dans l'image de début IMD.

Lors d'une étape 114, au sein de l'image de début IMD, la zone d'image comprise dans la boite englobante est copiée et une tracklet est créée avec ladite zone d'image. Cette tracklet est appelée tracklet avant.

Lors d'une étape 116, le suivi avant est réalisé sur au moins une partie des images du flux d'images F, qui suivent l'image de début IMD, dans l'ordre chronologique. Chaque image est analysée à tour de rôle, dans l'ordre chronologique, pour déterminer si l'objet cible apparait dans ladite image. Si oui, la zone d'image correspondant à l'objet cible est copiée et ajoutée dans la tracklet avant.

Le suivi avant peut être réalisé pour toutes les images du flux d'images F se trouvant après l'image de début IMD dans l'ordre chronologique. Alternativement, le suivi avant peut être réalisé pour toutes les images du flux d'images F se trouvant après l'image de début IMD, jusqu'à une image, dite image de milieu, notée IMM sans perte de généralité, dont l'instant de captation se trouve à mi-chemin entre l'instant de début IND et l'instant de fin INF.

Dans la suite, sans perte de généralité, on considère que le suivi avant s'arrête au traitement de l'image de milieu IMM.

Le procédé 100 comprend une phase 120 réalisant, dans le flux d'images F, le suivi arrière de l'objet cible, à partir de l'image de fin IMF.

Pour rappel, la phase de suivi arrière 120 réalise un suivi de l'objet cible dans l'ordre antéchronologique dans le flux d'images F, c'est-à-dire en traitant les images dans l'ordre antéchronologique de captation, à partir de l'image de fin IMF.

Lors d'une étape 122, l'objet cible est identifié dans l'image de fin IMF. Cette identification peut être réalisée manuellement. Alternativement, cette identification peut être réalisée de manière automatisée, par exemple avec un outil d'intelligence artificielle d'analyse d'images, tel que par exemple YOLOV5 à partir d'un visuel de l'objet cible. Lors de cette étape 112, par exemple, une boite englobante est positionnée sur l'objet cible dans l'image de fin IMF.

Lors d'une étape 124, au sein de l'image de fin IMF, la zone d'image comprise dans la boite englobante est copiée et une nouvelle tracklet est créée avec ladite zone d'image. Cette tracklet est appelée tracklet arrière.

Lors d'une étape 126, le suivi arrière est réalisé sur au moins une partie des images du flux d'images F, qui précèdent l'image de fin IMF, dans l'ordre chronologique. Chaque image est analysée à tour de rôle, dans l'ordre antéchronologique, pour déterminer si l'objet cible apparait dans ladite image. Si oui, la zone d'image correspondant à l'objet cible est copiée et ajoutée dans la tracklet arrière.

Le suivi arrière peut être réalisé pour toutes les images du flux d'images F se trouvant avant l'image de fin IMF dans l'ordre chronologique. Alternativement, le suivi arrière peut être réalisé pour toutes les images du flux d'images F se trouvant avant l'image de fin IMF, jusqu'à une image, dite image de milieu, notée IMM sans perte de généralité, dont l'instant de captation, noté INM sans perte de généralité, se trouve à mi-chemin entre l'instant de début IND et l'instant de fin INF.

Dans la suite, sans perte de généralité, on considère que le suivi arrière s'arrête au traitement de l'image de milieu IMM.

Le suivi avant, respectivement le suivi arrière, peut être réalisé selon toute technique connue en utilisant toute solution de suivi d'objet cible connue. Par exemple, chaque suivi peut être réalisé en utilisant la solution DeepSort ou Samurai.

Si les suivis avant et arrière réalisés respectivement lors des phases 110 et 120 ont été réalisés correctement, lesdits suivis devraient converger vers la même zone d'image dans l'image de milieu IMM, ou toute autre image traitée à la fois dans le suivi avant et dans le suivi arrière. Suivant une formulation générale, si les suivis avant et arrière réalisés respectivement lors des phases 110 et 120 ont été réalisés correctement, lesdits suivis devraient converger vers la même zone d'image pour chaque image traitée lors de chacun desdits suivis.

Pour vérifier cela, le procédé 100 comprend une étape 130 de vérification de la concordance desdits suivis. Par exemple, pour l'image de milieu IMM, la zone d'image obtenue par le suivi avant et se trouvant dans la tracklet avant est comparée à la zone d'image obtenue par le suivi arrière et se trouvant dans la tracklet arrière. Si les deux zones d'images concordent, alors on peut considérer que les suivis ont été réalisés correctement. Dans le cas contraire, on considère qu'au moins un desdits suivis a rencontré une erreur.

La concordance de deux zones d'images peut être vérifiée par comparaison de la position desdites zones d'images. Alternativement, la concordance de deux zones d'images peut être vérifiée par calcul d'un score de ressemblance, ou un score de différence, et plus généralement selon toute technique connue.

Lors d'une étape, optionnelle, 132 une étape de signalisation audio, visuelle ou audiovisuelle, peut être réalisée pour signaler le résultat de correspondance.

La signalisation peut être réalisée quel que soit le résultat de l'étape de vérification 130. Dans l'exemple représenté, et sans perte de généralité, la signalisation est réalisée lorsque l'étape de vérification 130 détecte une erreur de correspondance entre les tracklets avant et arrière.

Suivant des modes de réalisation, lorsque la vérification de la concordance est négative, c'est à dire lorsque les tracklets avant et arrière ne convergent/concordent pas, alors il est possible, optionnellement, de réaliser à nouveau le suivi avant, et/ou le suivi arrière, avec un autre outil de suivi que celui utilisé.

Une nouvelle tracklet avant, et/ou une nouvelle tracklet arrière, est obtenue avec le nouvel outil de suivi. L'étape de vérification peut alors être renouvelée avec ladite nouvelle tracklet ainsi obtenue.

Lorsque les tracklets avant et arrière correspondent, alors le procédé selon l'invention peut comprendre, une étape 134, optionnelle, de construction d'une tracklet finale à partir des tracklets avant et arrière. Par exemple, lorsque les suivis ont été réalisés jusqu'à l'image de milieu IMM, alors la tracklet avant peut être concaténée avec la tracklet arrière, en veillant à supprimer le résultat obtenu pour l'image du milieu dans l'une des deux tracklets, pour obtenir la tracklet finale.

Cette étape optionnelle 134 n'est pas réalisée lorsqu'au moins un des suivis avant et arrière est réalisé pour l'ensemble des images du flux d'images F. Dans ce cas, cette tracklet peut être mémorisée comme tracklet finale.

Lors d'une étape optionnelle 136, le procédé fournit la tracklet finale correspondant au suivi de l'objet cible dans le flux d'images.

Dans l'exemple représenté sur la FIGURE 1, le suivi avant est réalisé avant le suivi arrière. Bien entendu, l'invention n'est pas limitée à cet exemple. Dans d'autres modes de réalisation, le suivi arrière peut être réalisé avant le suivi avant. Suivant d'autres modes de réalisation, le suivant avant et le suivi arrière peuvent être réalisés en même temps, au moins partiellement.

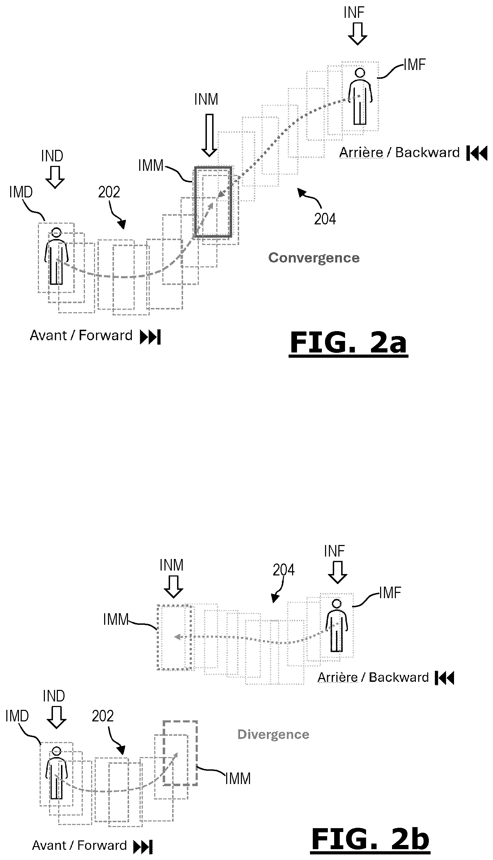

Les FIGURE 2a et 2b sont des représentations schématiques de deux exemples de réalisation non limitatifs d'un procédé de suivi d'un objet cible selon l'invention.

Dans les exemples des FIGURES 2a et 2b, de manière nullement limitative, l'objet cible est une personne.

Dans chacun des exemples, un suivi avant est réalisé à partir d'une image de début IMD sélectionnée dans le flux d'images F, captée à l'instant de début IND. De plus, un suivi arrière est réalisé à partir d'une image de fin IMF, sélectionnée dans le flux d'images F, et captée à un instant de fin INF. Chacun des suivis avant et arrière fournit une tracklet, respectivement une tracklet avant 202 et une tracklet arrière 204.

Chaque suivi est réalisé jusqu'à une image de milieu IMM, captée à un instant de milieu INM, se trouvant à mi-chemin entre l'instant de début IND et l'instant de fin INF, tel que INM=IND+(INF-IND)/2.

Dans l'exemple de la FIGURE 2a, les tracklets avant 202 et arrière 204 convergent vers la même zone d'image dans l'image de milieu IMM. Dans ce cas, le suivi de l'objet cible à été réalisé de manière correcte. De plus, une tracklet finale peut être obtenue à partir desdites tracklets avant 202 et arrière 204.

Dans l'exemple de la FIGURE 2b, les tracklets avant 202 et arrière 204 ne convergent pas. Dans ce cas, le suivi de l'objet cible est erroné, au moins pour l'une des deux tracklets 202 et 204.

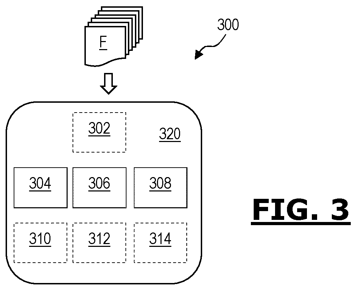

La FIGURE 3 est une représentation schématique d'un exemple de réalisation non limitatif d'un dispositif de suivi d'objet selon l'invention.

Le dispositif 300 peut être utilisé pour mettre en œuvre un procédé de suivi selon l'invention, et en particulier le procédé 100 de la FIGURE 1.

Le dispositif 300 permet de réaliser un suivi d'un objet cible dans un flux d'images F, donné en entrée du dispositif 300.

Le dispositif 300 comprend un module 302, optionnel, pour sélectionner une image de de début IMD, et/ou une image de fin IMF. En particulier, de manière nullement limitative, le module optionnel 302 peut être configuré pour mettre en œuvre au moins l'une des étapes 102 et 104 du procédé 100.

Le dispositif 300 comprend un module 304 pour réaliser un suivi avant. En particulier, de manière nullement limitative, le module 304 peut être configuré pour mettre en œuvre la phase de suivi avant 110 du procédé 100.

Le dispositif 300 comprend un module 306 pour réaliser un suivi arrière. En particulier, de manière nullement limitative, le module 306 peut être configuré pour mettre en œuvre la phase de suivi arrière 120 du procédé 100.

Le dispositif 300 comprend un module 308 pour réaliser une vérification de concordance des suivis réalisés. En particulier, de manière nullement limitative, le module 308 peut être configuré pour mettre en œuvre l'étape de vérification 130 du procédé 100.

Le dispositif 300 peut comprendre un module 310, optionnel, pour réaliser une signalisation. En particulier, de manière nullement limitative, le module optionnel 310 peut être configuré pour mettre en œuvre l'étape de signalisation 132 du procédé 100.

Le dispositif 300 peut comprendre un module 312, optionnel, pour générer une tracklet finale. En particulier, de manière nullement limitative, le module optionnel 312 peut être configuré pour mettre en œuvre l'étape 134 du procédé 100.

Le dispositif 300 peut comprendre un module 314, optionnel, pour fournir une tracklet finale pour l'objet cible. En particulier, de manière nullement limitative, le module optionnel 314 peut être configuré pour mettre en œuvre l'étape 136 du procédé 100.

Au moins un des modules 302-314 peut être un module indépendant des autres modules 302-314.

Au moins deux des modules 302-314 peuvent être intégrés au sein d'un même module, par exemple une unité de calcul 320.

Au moins un des modules 302-314 peut être un module matériel, tel qu'un processeur, une puce électronique, etc.

Au moins un des modules 302-314 peut être un module logiciel, tel qu'un programme d'ordinateur.

Au moins un des modules 302-314 peut être une combinaison d'au moins un module logiciel et d'au moins un module matériel.

En particulier, au moins un des modules 302-314 peut être intégré dans une puce électronique, ou encore dans une application installée dans un appareil utilisateur.

En particulier, le dispositif de suivi d'objets 300 peut se présenter sous la forme d'une unité de calcul 320 comprenant tous les modules 302-314.

Bien entendu l'invention n'est pas limitée aux exemples qui viennent d'être décrits.

## Revendications

1. Procédé (100) de suivi d'un objet cible dans un flux d'images (F), ledit procédé (100) comprenant les étapes suivantes :
- réalisation d'une pluralité de suivis dudit objet cible dans ledit flux d'images (F), ladite pluralité de suivis comprenant :
▪ un suivi (110) dudit objet cible, dit suivi avant, réalisé à partir d'une image de début (IMD) dudit flux d'images (F), dans l'ordre chronologique dans ledit flux d'images (F), et fournissant une tracklet (202), dite tracklet avant, pour ledit objet cible, et
▪ un suivi (120) dudit objet cible, dit suivi arrière, réalisé à partir d'une image de fin (IMF) dudit flux d'images (F), dans l'ordre antéchronologique dans ledit flux d'images (F), et fournissant une tracklet (204), dite tracklet arrière, pour ledit objet cible ; et
- vérification (130) d'une concordance entre lesdites tracklets obtenues (202,204).

2. Procédé (100) selon la revendication précédente, **caractérisé en ce que** l'étape de vérification (130) comprend une vérification d'une correspondance des tracklets (202,204) obtenues, à au moins un instant intermédiaire (INM) se trouvant entre les instants de captation respectifs des images de début (IND) et de fin (INF).

3. Procédé (100) selon l'une quelconque des revendications précédentes, **caractérisé en ce que** l'étape de vérification (130) comprend une vérification d'une correspondance des tracklets obtenues (202,204), à mi-chemin entre les instants de captation respectifs des images de début (IMD) et de fin (IMF).

4. Procédé (100) selon l'une quelconque des revendications précédentes, **caractérisé en ce que** l'étape de vérification (130) comprend une vérification d'une correspondance des positions de l'objet cible, ou d'une boite englobant ledit objet cible, dans les tracklets obtenues (202,204), à un même instant.

5. Procédé (100) selon l'une quelconque des revendications précédentes, **caractérisé en ce que** l'étape de vérification (130) comprend une vérification d'une correspondance de zones d'image dans les tracklets obtenues (202,204), à un même instant.

6. Procédé (100) selon l'une quelconque des revendications précédentes, **caractérisé en ce qu'**au moins un, et en particulier chaque, suivi (110,120) est réalisé jusqu'à la fin du flux d'images (F) dans le sens dudit suivi (110,120).

7. Procédé (100) selon l'une quelconque des revendications précédentes, **caractérisé en ce qu'**au moins un, et en particulier chaque, suivi (110,120) est réalisé jusqu'à un instant correspond à mi-chemin entre l'instant de début et l'instant de fin.

8. Procédé (100) selon l'une quelconque des revendications précédentes, **caractérisé en ce qu'**il comprend une étape (136) de fourniture d'une tracklet, dite finale, pour l'objet cible, lorsque l'étape de vérification (130) confirme la correspondance entre les tracklets obtenues (202,204).

9. Procédé (100) selon la revendication précédente, **caractérisé en ce que** la tracklet finale correspond à l'une des tracklets avant (202) et arrière (204).

10. Procédé (100) selon la revendication 11, **caractérisé en ce qu'**il comprend une étape (134) de construction d'une tracklet, dite finale, pour l'objet cible à partir des tracklets avant (202) et arrière (204).

11. Procédé (100) selon l'une quelconque des revendications précédentes, **caractérisé en ce qu'**il comprend une étape (132) de signalisation d'un résultat de l'étape de vérification (130).

12. Procédé (100) selon l'une quelconque des revendications précédentes, **caractérisé en ce que** :
- l'image de début (IMD) correspond à l'image la plus ancienne dans le flux d'images (F) ; et/ou
- l'image de fin (IMF) correspond à l'image la plus récente dans le flux d'images (F).

13. Procédé (100) selon l'une quelconque des revendications précédentes, **caractérisé en ce qu'**il comprend, pour au moins un des suivis (110,120), la réalisation dudit suivi (110,120) comprend une identification dudit objet cible, dans l'image (IMD, IMF) par laquelle commence ledit suivi, par sélection d'une boite, dite bounding box, comprenant ledit objet cible.

14. Programme d'ordinateur comprenant des instructions exécutables qui, lorsqu'elles sont exécutées par un appareil informatique, mettent en en œuvre toutes les étapes du procédé (100) de suivi selon l'une quelconque des revendications précédentes.

15. Dispositif (300) de suivi d'un objet cible comprenant des moyens (302-314) configurés pour mettre en œuvre toutes les étapes du procédé (100) de suivi selon l'une quelconque des revendications 1 à 13.
